# EUROPÄISCHE PATENTSCHRIFT

(11) **EP 2 268 949 B1**
(45) Veröffentlichungstag und Bekanntmachung des Hinweises auf die Patenterteilung: **04.01.2012**
(21) Anmeldenummer: 09732369.5
(22) Anmeldetag: 04.02.2009
(51) Int. Cl.: F16K 31/06

(54) **ELEKTRISCHES UMSCHALTVENTIL**
ELECTRICAL SWITCHING VALVE
VANNE DE COMMUTATION ÉLECTRIQUE

(30) Priorität: 17.04.2008 DE 102008019209
(43) Veröffentlichungstag der Anmeldung: 05.01.2011
(73) Patentinhaber: Pierburg GmbH, 41460 Neuss (DE)
(72) Erfinder: BUSE, Werner, 41564 Kaarst (DE); DENNE, Albert, 40667 Meerbusch (DE)
(74) Vertreter: Ter Smitten, Hans
(86) Internationale Anmeldenummer: PCT/EP2009/051232
(87) Internationale Veröffentlichungsnummer: WO 2009/127450

(56) Entgegenhaltungen:
- EP-A- 0 095 331
- EP-A- 0 633 415
- US-A- 4 326 696

## Beschreibung

Die Erfindung betrifft ein elektrisches Umschaltventil, insbesondere zur Steuerung von pneumatischen Stellelementen, mit einem Gehäuse, dass einen Belüftungsanschlusskanal, einen Vakuumanschlusskanal sowie einen Verbraucheranschlusskanal aufweist, wobei in dem Gehäuse ein elektromagnetischer Antrieb derart angeordnet ist, dass ein Magnetanker in einem Durchlasskanal translatorisch beweglich ist und einen Ventilverschlusskörper für den Vakuumanschlusskanal und den Belüftungsanschlusskanal bildet, die jeweils einen Ventilsitz aufweisen.

Ein derartiges elektrisches Umschaltventil ist beispielsweise aus der DE 44 19 875 B4 bekannt. Mit einem derartigen elektrischen Umschaltventil können insbesondere pneumatische Steller wie zum Beispiel Unterdruckdosen angetrieben werden. Diese Unterdruckdosen treiben wiederum Stellorgane am Motor wie zum Beispiel Saugrohrklappen, Abgasklappen oder ähnliches an. Dabei wird das Stellorgan der Unterdruckdose bei bestromten elektrischem Umschaltventil gegen eine Federkraft eine Hubbewegung ausführen. Diese Bewegung läuft bei stark ausgeführten Federn "langsam" aber zügig ab. Wird das elektromagnetische Umschaltventil dann stromlos geschaltet, erfolgt die Rückstellbewegung der Unterdruckdose allein durch die Federkraft. Bei stark ausgeführten Federn kann dann die Rückstellbewegung sehr schnell erfolgen, was im Anwendungsfall einer Klappe zu einem deutlich hörbaren Anschlag derselben führen kann. Dieser harte Anschlag der Klappe bedeutet neben der Geräuschentwicklung auch einen erhöhten Verschleiß des Klappensystems.

Aus der EP 0 095 331 ist ein elektrisches Druckregel-Ventil bekannt, das einen Überdruckanschluss, einen Verbraucheranschluss und einen Entlüftungsanschluss aufweist. Um den Druck zu regeln, schaltet das Ventil schnell zwischen den Ventilsitzen des Überdruckanschlusses und des Entlüftungsanschlusses hin und her, wobei ein schnelles Ansprechverhalten gefordert ist. Hierbei sind beide Ventilsitze als Kunststoffeinlegeteil ausgebildet. Ein derartig ausgeführtes Umschaltventil würde ebenfalls eine viel zu schnelle Rückstellbewegung der zu steuernden Klappen verursachen.

Aus EP 633 415 A1 ist wiederum ein gattungsgemäßes Umschaltventil mit einem Unterdruckanschluss, einem Verbraucheranschluss und einem Belüftungsanschluss bekannt. Hierbei dient als Ventilsitz für den Belüftungsanschluss ein in den Kern des elektromagnetischen Antriebs eingestecktes Rohrelement. Auch mit diesem Umschaltelement ist ein sogenannter "harter Anschlag" einer angeschlossenen Klappenvorrichtung nicht zu vermeiden.

Hiervon ausgehend liegt der Erfindung die Aufgabe zugrunde, ein elektrisches Umschaltventil zu verschaffen, das die o. g. Nachteile vermeidet.

Diese Aufgabe wird dadurch gelöst, dass im Belüftungsanschlusskanal ein Mittel zur Querschnittsverengung vorgesehen ist. Durch diesen Belüftungsanschlusskanal wird die Luftströmung während der Rückstellbewegung des pneumatischen Stellers im unbestromten Zustand des elektrischen Umschaltventils gedrosselt und damit ein möglicher harter Anschlag einer Klappe vermindert oder gedämpft.

Bei einer vorteilhaften Ausführungsform ist zumindest ein Teil des Belüftungsanschlusskanals durch ein Rohrelement gebildet, dessen vom Belüftungsanschluss abgewandtes Ende den Ventilsitz formt.

Als geeignetes Mittel zur Querschnittsverengung hat sich eine Düse, eine Blende oder ähnliches erwiesen. Dabei kann es aus fertigungstechnischer Sicht besonders vorteilhaft sein, wenn das Rohrelement als Rohrdüse ausgebildet ist.

Eine äußerst platzsparende Ausführungsform wird erreicht, wenn das pneumatische Stellelement direkt mit dem Verbraucheranschlusskanal verbunden ist, derart, dass das elektrische Umschaltventil und das pneumatische Stellelement ein Bauteil bilden.

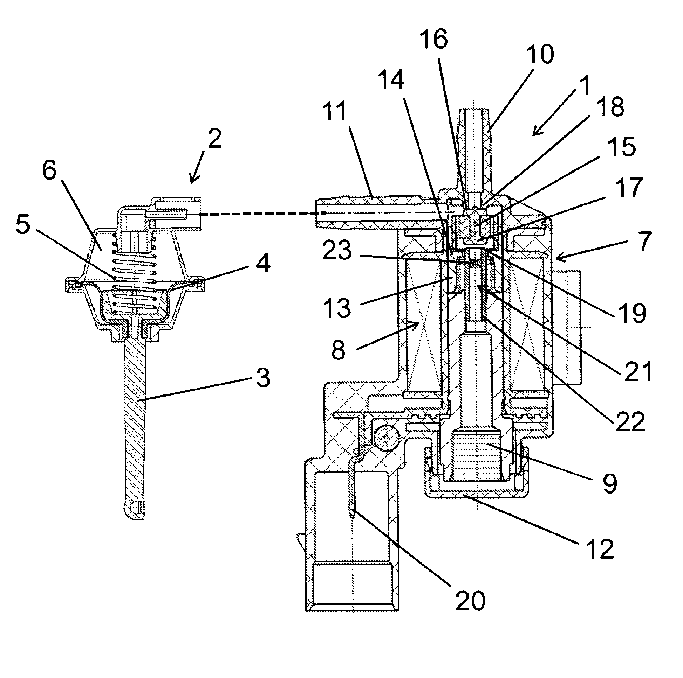

Ein Ausführungsbeispiel der Erfindung ist in der Zeichnung dargestellt und wird nachfolgend beschrieben.

Die Zeichnung zeigt ein elektrisches Umschaltventil 1 das über eine schematisch dargestellte Schlauchverbindung mit einem pneumatischen Stellelement 2 verbunden ist. Das pneumatische Stellelement 2 weist dabei im wesentlichen eine Membranstange 3, beispielsweise für eine nicht dargestellte Klappe, auf, die an einer Membrane 4 befestigt ist und durch eine Feder 5 in einer im vorliegenden Fall ausgefahrenen Stellung fixiert ist. Damit die Membranstange 3 entgegen der Federkraft der Feder 5 eingefahren wird, muss im Raum 6 ein Vakuum aufgebaut werden. Dieses Vakuum wird durch das elektrische Umschaltventil 1 bereit gestellt. Dabei besteht das elektrische Umschaltventil 1 aus einem Kunststoffgehäuse 7, in dem ein an sich bekannter elektromagnetischer Antrieb 8 angeordnet ist. Des Weiteren weist das Gehäuse 7 einen Belüftungsanschlusskanal 9, einen Vakuumanschlusskanal 10 sowie ein Verbraucheranschlusskanal 11 auf. Der Belüftungsanschlusskanal 9 kann dabei durch ein Filterelement 12 abgedeckt sein. Der Vakuumanschlusskanal 10 ist auf bekannte Weise mit einer nicht dargestellten Vakuumquelle, beispielsweise einer Vakuumpumpe, verbunden. Der Verbraucheranschlusskanal 11 ist über die nur schematisch dargestellte Schlauchverbindung mit dem pneumatischen Stellelement 2 verbunden. In einem Durchlasskanal 13 ist ein Magnetanker 14 translatorisch beweglich angeordnet. Der Magnetanker 14 weist dabei einen Ventilverschlusskörper 15 auf, der zwei Dichtflächen 16 und 17 besitzt, so dass der Ventilverschlusskörper 15 sowohl mit dem Vakuumanschlusskanal 10 als auch mit dem Belüftungsanschlusskanal 9 zusammen wirken kann, derart, dass entweder ein Vakuum über den Verbraucheranschlusskanal 11 in dem Raum 6 des pneumatischen Stellelementes 2 hergestellt wird, oder der Raum 6 über den Verbraucheranschlusskanal 11 belüftet wird. Um diese Funktion ausüben zu können, weist der Vakuumanschlusskanal 10 einen Ventilsitz 18 und der Belüftungsanschlusskanal 9 einen Ventilsitz 19 auf. Über einen elektrischen Anschluss 20 ist das elektrische Umschaltventil 1 mit einer Steuereinheit verbindbar.

Um bei der Belüftung des Raumes 6 die Rückstellbewegung der Membranstange 3 aufgrund der Federkraft der Feder 5 zu dämpfen, ist im Belüftungsanschlusskanal 9 ein Mittel 21 zur Querschnittsverengung vorgesehen. Im vorliegenden Fall besteht dieses Mittel aus einer Rohrdüse 21 die sowohl ein Rohrelement 22 als auch eine Düse 23 bildet. Das vom Belüftungsanschluss abgewandte Ende des Rohrelementes 22 formt dabei außerdem den Ventilsitz 19. Die Düse 23 gewährleistet, dass in dem Moment, in dem das elektrische Umschaltventil 1 im vorliegenden Fall stromlos geschaltet wird und damit der Ventilverschlusskörper 15 mit seiner Dichtfläche 16 den Vakuumanschlusskanal 10 verschließt, um den Raum 6 des pneumatischen Stellelementes zu belüften, die Luft die durch den Belüftungsanschlusskanal 9 strömt, gedrosselt wird. Auf diese Weise wird die Rückstellbewegung der Membranstange 3 stark verlangsamt. Damit wird eine Anschlaggeschwindigkeit einer durch die Membranstange 3 zu bewegenden Klappe vermindert. Dies bedeutet eine geringere Geräuschentwicklung, aber auch einen geringeren Verschleiß für die Klappe und den damit korrespondierenden Klappenanschlag.

Die vorliegende Ausführungsform besitzt darüber hinaus noch den Vorteil, dass die Funktionen des Ventilsitzes 19 und des Düsenelementes 23 in einem Bauteil vereinigt sind. Es sollte jedoch deutlich sein, dass auch jede andere Form der Querschnittsverengung, insbesondere eine Blende, die zu einer Drosselung des Luftstromes führen kann, bei einem derartigen elektrischen Umschaltventil 1 eingesetzt werden kann. Auch kann die Düse natürlich unabhängig von einem Rohrelement im Belüftungskanal angeordnet werden.

## Patentansprüche

1. Elektrisches Umschaltventil insbesondere zur Steuerung von pneumatischen Stellelementen (2), mit einem Gehäuse (7), dass einen Belüftungsanschlusskanal (9), einen Vakuumanschlusskanal (10) sowie einen Verbraucheranschlusskanal (11) aufweist, wobei in dem Gehäuse ein elektromagnetischer Antrieb (8) derart angeordnet ist, dass ein Magnetanker (14) in einem Durchlasskanal (13) translatorisch beweglich ist und ein Ventilverschlusskörper (15) für den Vakuumanschlusskanal (10) und dem Belüftungsanschlusskanal (9) bildet, jeweils einen Ventilsitz (18, 19) aufweisen, **dadurch gekennzeichnet, dass** im Belüftungsanschlusskanal (9) ein Mittel (23) zur Querschnittsverengung vom Ventilsitz (19) beanstandet vorgesehen ist, wobei das Mittel (23) eine Düse, eine Blende oder ähnliches ist.

2. Elektrisches Umschaltventil nach Anspruch 1, dadurch gekenntzeichnet dass zumindest ein Teil des Belüftungsanschlusskanals (9) durch ein Rohrelement (22) gebildet ist, dessen vom Belüftungsanschluss abgewandtes Ende den Ventilsitz (19) formt.

3. Elektrisches Umschaltventil nach Anspruch 1 oder 2, **dadurch gekennzeichnet, dass** das Rohrelement (22) als Rohrdüse (21) ausgebildet ist.

4. Elektrisches Umschaltventil nach einem der vorhergehenden Ansprüche, **dadurch gekennzeichnet, dass** das pneumatische Stellelement (2) direkt mit dem Verbraucheranschlusskanal (11) verbunden ist, derart, dass das elektrische Umschaltventil (1) und das pneumatische Stellelement (2) ein Bauteil bilden.

## Claims

1. Electrical switching valve, in particular for the control of pneumatic actuators (2), comprising a housing (7) with a ventilation connection channel (9), a vacuum connection channel (10), as well as a load connection channel (11), an electromagnetic drive (8) being arranged in the housing such that a solenoid armature (14) is movable for translation within a passage channel (13) and forms a valve closing body (15) for the vacuum connection channel (10) and the ventilation connection channel (9) which each comprise a valve seat (18, 19), **characterized in that**, in the ventilation connection channel (9), a means (23) for a constriction of the cross section is provided at a distance from the valve seat (19), the means being a nozzle, a shutter or the like.

2. Electrical switching valve of claim 1, **characterized in that** at least a part of the ventilation connection channel (9) is formed by a tube element (22) whose end averted from the ventilation connection channel forms the valve seat (19).

3. Electrical switching valve of claim 1 or 2, **characterized in that** the tube element (22) is formed as a tubular nozzle (21).

4. Electrical switch valve of one of the preceding claims, **characterized in that** the pneumatic actuator (2) is connected directly to the load connection channel (11) such that the electrical switch valve (1) and the pneumatic actuator (2) form one component.

## Revendications

1. Vanne de commutation électrique, notamment pour commander des actionneurs pneumatiques (2), comprenant un boitier (7) avec un canal de raccord de ventilation (9), un canal de raccord à vide (10) et un canal de raccord de consommateur (11), un dispositif d'entrainement électromagnétique (8) étant disposé dans ledit boitier de sorte qu'une armature d'aimant (14) est mobile en translation dans un canal de passage (13) et forme un élément d'obturation à vanne (15) pour ledit canal de raccord à vide (10) et ledit canal de raccord de ventilation (9), les deux canaux comprenant un siège de vanne (18, 19), **caractérisée en ce que**, dans ledit canal de raccord de ventilation (9), un moyen (23) de réduction de la section transversale est disposée à distance dudit siège de vanne (19), ledit moyen étant une buse, un obturateur ou similaire.

2. Vanne de commutation électrique selon la revendication 1, **caractérisée en ce qu'**au moins une partie dudit canal de raccord de ventilation (9) est formée par un élément de tube (22) dont l'extrémité détournée dudit canal de raccord de ventilation forme le siège de vanne (19).

3. Vanne de commutation électrique selon les revendications 1 ou 2, **caractérisée en ce que** ledit élément de tube (22) est réalisé sous forme d'une buse tubulaire (21).

4. Vanne de commutation électrique selon l'une quelconque des revendications précédentes, **caractérisée en ce que** ledit actionneur pneumatique (2) est directement lié au canal de raccord de consommateur (11) de sorte que ladite vanne de commutation électrique (1) et ledit actionneur pneumatique (2) forment un élément.
